# FASCICULE DE BREVET EUROPEEN

(11) **EP 4 029 813 B1**
(45) Date de publication et mention de la délivrance du brevet: **13.11.2024**
(21) Numéro de dépôt: 22151177.7
(22) Date de dépôt: 12.01.2022
(51) Int. Cl.: B65G 21/20, B65G 39/04

(54) **DISPOSITIF DE CONVOYAGE ET DE TRI DE MATIÈRE À RIVE STRUCTURELLE**
FÖRDER- UND SORTIERVORRICHTUNG FÜR MATERIAL MIT STRUKTURELLER KANTE
DEVICE FOR CONVEYING AND FOR SORTING MATERIAL WITH STRUCTURAL EDGE

(30) Priorité: 13.01.2021 FR 2100294
(43) Date de publication de la demande: 20.07.2022
(73) Titulaire: Aktid, 73000 Chambery (FR)
(72) Inventeur: SABOT, Bertrand, 73000 CHAMBERY (FR); TOCCHINI, Stéphane, 73000 CHAMBERY (FR); MILIN, Frédéric, 73000 CHAMBERY (FR)
(74) Mandataire: Innovincia

(56) Documents cités:
- EP-A1- 2 258 636
- EP-A1- 3 097 029
- DE-A1- 2 851 978
- DE-A1- 4 308 982
- FR-A1- 2 451 330
- FR-A1- 2 677 625
- US-A1- 2015 210 475

## Description

L'invention concerne le domaine des installations de tri de matière et plus particulièrement un dispositif de convoyage et de triage pour tri au sein d'une unité de traitement et de valorisation de matière.

Dans le domaine du tri de matière, les matières sont amenées aux dispositifs de tri par des dispositifs de convoyage ou convoyeurs. Lors de ce convoyage, la matière est triée, par exemple par des dispositifs automatisés comme des aimants ou encore de manière manuelle par des opérateurs placés le long du dispositif de convoyage.

Un dispositif de convoyage est classiquement composé d'un corps principal (i.e. structure métallique de base de l'ensemble) lui-même composé d'un ensemble de profilés formant une structure de base et pouvant supporter entre autres :
- une sole de glissement vissée sur certains profilés du corps principal sur laquelle repose au moins une bande de convoyage,
- un ensemble de galets en contact avec la bande de guidage, placés sous cette dernière et fixés sur les faces internes du corps principal, et
- des rives de guidage de la matière présentes sur le convoyeur au-dessus du corps principal (en étant fixées à ce dernier) et empêchant cette dernière de basculer hors du convoyeur. Un dispositif selon le préambule de la revendication 1 est connu de l'état de la technique FR 2 677 625 A1.

De tels dispositifs de convoyage peuvent présenter deux inconvénients notables.

Le premier réside dans le coût de fabrication de ce dispositif de convoyage. En effet, il est nécessaire de concevoir un corps principal composé d'un ensemble de profilés puis de rapporter sur celui-ci entre autres les éléments listés ci-dessus. Cela conduit donc à un apport de matière, notamment d'acier, important.

De plus, les dispositifs de convoyage sont amenés à fonctionner tous les jours sans discontinuer et vingt-quatre heures par jour. Il est parfois nécessaire de devoir réaliser des opérations de maintenance, par exemple en cas de casse d'un élément du dispositif de convoyage. C'est notamment le cas des galets. Cependant, l'architecture décrite ci-dessus ne permet pas une maintenance aisée du dispositif de convoyage du fait de la difficulté d'accès aux différentes pièces pouvant s'user. Il est donc nécessaire, pour assurer cette maintenance, de stopper le dispositif de convoyage pour pouvoir avoir accès à un élément cassé, par exemple un ou plusieurs galets. Cela conduit à un arrêt de la chaîne de tri et donc à une perte de rendement du tri, ce qui n'est pas souhaitable.

L'invention a notamment pour but de fournir un dispositif de convoyage plus économique au niveau de sa conception et permettant une maintenance plus facile que les dispositifs de convoyage selon l'art antérieur.

A cet effet l'invention a pour objet un dispositif de convoyage et de tri de matériaux comprenant au moins deux rives de guidage des matériaux, au moins une bande de convoyage, un support de la bande de convoyage et un système de guidage de retour de bande de convoyage, au moins une rive de guidage constituant un élément structurel du dispositif de convoyage.

Ainsi, on utilise au moins une rive de guidage comme base structurelle du dispositif de convoyage en rapportant par exemple sur cette dernière les éléments permettant de supporter un support de bande de convoyage (et donc la ou les bandes de convoyage) et le système de guidage de retour de bande de convoyage. On s'affranchit par conséquent d'un corps principal comme utilisé dans l'art antérieur, ce qui permet de simplifier l'architecture de l'ensemble et de réduire le coût du dispositif de convoyage en réduisant la quantité de matériaux (principalement d'acier) utilisée.

Selon l'invention :
- le système de guidage de retour de bande de convoyage peut comprendre plusieurs blocs de galets formés par une barre de support fixée à deux profilés, chacun des deux profilés étant fixés sur une rive de guidage différente l'un de l'autre, et sur laquelle sont fixés des galets ;
- la barre de support peut être placée dans des fentes d'insertion réalisées dans les extrémités libres des profilés, le dispositif de convoyage comprenant un moyen de fixation amovible traversant l'extrémité libre des profilés et la barre de support ;

Suivant d'autres caractéristiques optionnelles du système de nettoyage prises seules ou en combinaison :
- le dispositif de convoyage peut comprendre plusieurs traverses s'étendant entre les rives de guidage, fixées à ces dernières et supportant le support de bande de convoyage ;
- le dispositif de convoyage peut comprendre plusieurs profilés fixés à chaque rive de guidage, le système de guidage de retour de bande de convoyage étant fixé à des extrémités libres des profilés s'étendant à partir d'un côté des rives de guidage ;
- chaque profilé peut être fixé sur une rive de guidage s'étend en regard d'un profilé fixé sur l'autre rive de guidage ;
- chaque galet peut être fixé à la barre de support par l'intermédiaire d'un support dont une extrémité est fixée à la barre de support et une autre extrémité est fixée au galet ;
- le support de bande de convoyage peut comprendre une sole de glissement composée de plusieurs soles de glissement, chaque sole de glissement étant emboîtée sur plusieurs traverses ;
- le système de guidage de retour de bande de convoyage peut être fixé aux profilés par l'intermédiaire d'une pièce de réglage de l'orientation du système de guidage de retour de bande de convoyage ;
- une bavette souple peut être fixée à chaque rive de guidage et s'étend au-dessus de la bande de convoyage, la fixation de la bavette souple à la rive de guidage étant accessible depuis l'extérieur du dispositif de convoyage ; et
- une plaque de protection peut s'étendre en partie au-dessus de la bavette souple.

Selon des caractéristiques non couvertes par l'invention :
- Le système de guidage de retour de bande est un rouleau lisse ou anti colmatant comprenant des roulements intégrés au rouleau, un axe de rotation du rouleau étant glissé dans un support fendu fixé à deux profilés, chacun des deux profilés étant fixés sur une rive de guidage différente l'une de l'autre ;
- la barre de support peut traverser les profilés par des orifices traversants ménagés dans les extrémités libres des profilés, un moyen de fixation amovible traversant la barre de support au niveau de ses portions ayant traversé les orifices traversants ;
- la barre de support peut être tubulaire et les orifices traversants peuvent être circulaires ; et
- chaque support de galet peut comprendre un patin au niveau d'un côté non fixé au galet, le patin étant agencé de manière à pouvoir être mis en contact avec la bande de convoyage en cas de rotation de la barre de support autour d'un axe longitudinal de la barre de support ;

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en coupe transversale d'un dispositif de convoyage selon l'invention ;
[Fig. 2] la figure 2 est une vue en perspective de la zone de fixation d'un système de guidage de retour de bande de convoyage à une rive structurelle ;
[Fig. 3] la figure 3 est une vue en perspective du dessous d'une portion du dispositif de convoyage selon un exemple ne faisant pas partie de l'invention ;
[Fig. 4] la figure 4 est une vue en perspective d'une portion terminale du dispositif de convoyage selon l'invention comprenant une bavette souple et une plaque de protection ;
   - [Fig. 5] la figure 5 est une vue en perspective du dessous d'une portion du dispositif de convoyage selon un exemple ne faisant pas partie de l'invention.

### Description détaillée

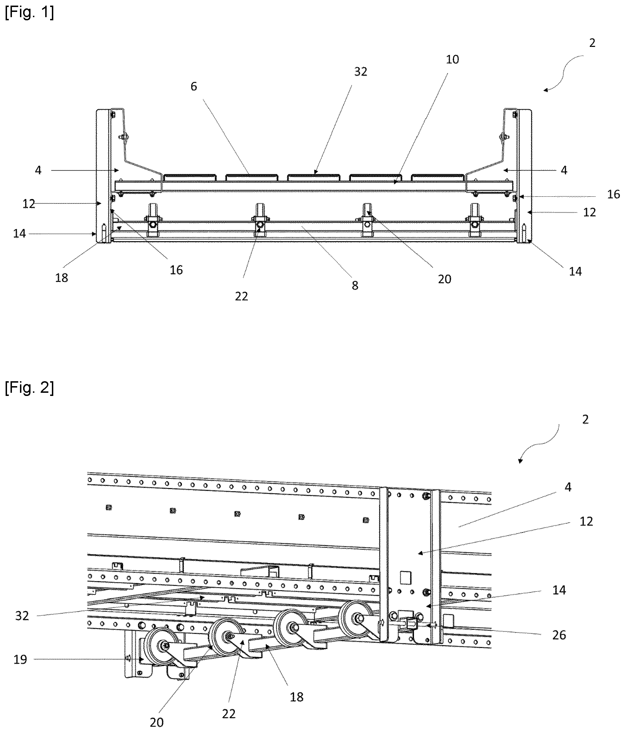

On se réfère désormais à la figure 1 illustrant un dispositif de convoyage 2. Ce dernier permet le tri des matière convoyées, par exemple par des dispositifs automatisés comme des aimants ou encore de manière manuelle par des opérateurs placés le long du dispositif de convoyage 2. Comme expliqué plus haut, ce type de dispositif est amené à fonctionner tous les jours sans discontinuer et vingt-quatre heures par jour.

Le dispositif de convoyage 2 comprend au moins deux rives de guidage 4 des matériaux. Ces dernières peuvent avoir, comme vu sur la figure 1, la forme de profilés métalliques creux encadrant une bande de convoyage 5. Elles permettent d'assurer un maintien des matériaux triés à l'intérieur du dispositif de convoyage 2.

Au moins une rive de guidage 4 constitue un élément structurel du dispositif de convoyage. On entend par cela que, contrairement à l'art antérieur dans lequel elles n'avaient qu'un rôle de guidage, les rives de guidage 4 sont utilisées pour former la structure du dispositif de convoyage 2. En effet, et comme cela sera expliqué par la suite, les différents autres éléments constituant le dispositif de convoyage 2 sont fixés directement ou indirectement aux rives de guidage 4 formant la base de la structure du dispositif de convoyage 2.

Les deux rives de guidage 4 peuvent être reliées l'une à l'autre par plusieurs traverses 10 (une de ces traverses est visible sur la figure 1). Ces dernières peuvent par exemple s'étendre perpendiculairement à la direction d'extension des rives de guidage 4 (parallèles entre elles) en étant fixées à ces dernières, par exemple par vissage ou tout autre moyen connu de l'homme du métier.

Le dispositif de convoyage 2 comprend également un support de bande convoyage 6. Ce dernier peut par exemple être une sole de glissement ou encore un ensemble de rouleaux porteurs et permet à la bande de convoyage 5, par exemple mise en mouvement par un actionneur et un tambour situés à une extrémité du dispositif de convoyage 2 (non représentés sur les figures), de s'étendre le long du dispositif de convoyage 2.

Dans le cas où le support de bande convoyage 6 est une sole de glissement, cette dernière peut comprendre plusieurs soles de glissement 32, chaque sole de glissement étant emboîtée sur plusieurs traverses. On peut pour cela envisager que chaque sole de glissement comprend plusieurs pions au niveau de ses zones en contact avec des traverses 10 et collaborant avec des orifices traversants de forme complémentaires ménagés dans ces traverses 10.

L'avantage de cet emboîtement est de permettre une manipulation aisée, par exemple en cas de nécessité de maintenance, des soles de glissement 32 en comparaison de l'art antérieur.

Le dispositif de convoyage 2 comprend également un système de guidage de retour de bande de convoyage 8 permettant de s'assurer d'une bonne avancée de la bande de convoyage 5 quand cette dernière passe sous le support de bande de convoyage 6, plus précisément entre ce dernier et le système de guidage de retour de bande de convoyage 8. En d'autres termes, et lorsque la bande de convoyage 5 arrive en bout de dispositif de convoyage, elle passe sous le support de bande de convoyage 6 via un tambour, le système de guidage de retour de bande de convoyage 8 permettant de s'assurer que la bande de convoyage 5 ne se désaxe pas.

Le dispositif de convoyage 2 peut également comprendre plusieurs profilés 12 fixés à chaque rive de guidage 4, le système de guidage de retour de bande de convoyage 8 étant fixé à des extrémités libres 14 des profilés s'étendant à partir d'un côté 16 des rives de guidage 4 (les profilés fixés sur les rives de guidage étant visibles sur les figures 1 à 3). De cette manière, les points de fixation des systèmes de guidage de retour de bande de convoyage 8 aux profilés 12 sont facilement accessibles, notamment en cas e nécessité de maintenance. Classiquement, les profilés s'étendent verticalement (le dispositif de convoyage 2 est placé ici sur le sol) dans une direction perpendiculaire à la direction d'extension des rives de guidage 4.

De préférence chaque profilé 12 fixé sur une rive de guidage 4 s'étend en regard d'un profilé fixé 12 sur l'autre rive de guidage 4. Ainsi, les éléments formant le système de guidage de retour de bande de convoyage 8 s'étendent horizontalement (le dispositif de convoyage 2 est placé ici sur le sol) dans une direction perpendiculaire à la direction d'extension des rives de guidage 4, et donc à la direction d'avancé de la bande de convoyage 5.

Le système de guidage de retour de bande de convoyage 8 comprend plusieurs blocs de galets. Ce système peut être passif : on entend par là que les blocs de galets sont mis en mouvement par la bande de convoyage 5 (qui est quant à elle mise en mouvement par un tambour et un actionneur comme expliqué plus haut) sans être motorisés.

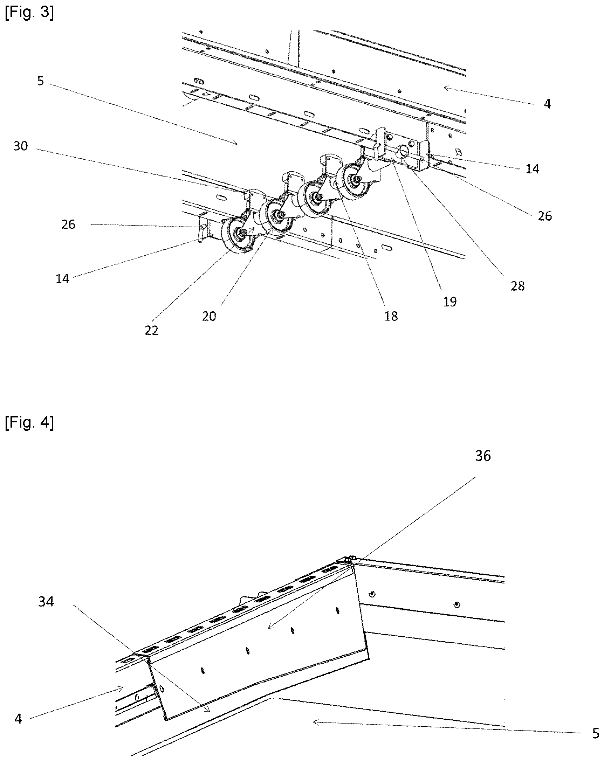

Le système de guidage de retour de bande de convoyage 8 étant formé par plusieurs blocs de galets, chacun de ces blocs (qui, comme expliqué plus haut, peuvent s'étendre entre les profilés 12) est formé par une barre de support 18 fixée à deux profilés 12, chacun des deux profilés 12 étant fixés sur une rive de guidage 4 différente l'un de l'autre, et sur laquelle sont fixés des galets 20. Cette structure est visible sur les figures 2 et 3. On a donc une barre de support 18 à partir de laquelle des galets 20 s'étendent, ces galets étant destinés à être en contact avec la bande de convoyage 5 afin d'assurer le guidage de cette dernière.

La barre de support 18 est de préférence placée dans des fentes d'insertion 24 (manque une figure) réalisées dans les extrémités libres 14 des profilés 12, le dispositif de convoyage 2 comprenant un moyen de fixation amovible 26 traversant l'extrémité libre 14 des profilés 12 et la barre de support 18.

Les fentes d'insertion 24 peuvent avoir une forme générale de U, comme sur la figure 2, pour pouvoir y loger une barre de support cylindrique à base carré. On verra par la suite que cela peut varier.

Concernant le moyen de fixation amovible, il peut s'agir, comme cela est visible sur les figures 2 et 3, d'une goupille. Lorsque la barre de support 18 est placé dans une fente d'insertion 24 (ou, selon un exemple non couvert par l'invention, traverse un orifice traversant ménagé dans une extrémité libre 14 des profilés 12), des trous ménagés dans cette dernière sont alignés avec d'autres réalisés au niveau de l'extrémité libre 14 d'un profilé 12 pour pouvoir ensuite glisser la goupille au travers de ces trous alignés (la goupille a dans cet exemple une forme de L) afin de maintenir la barre de support 18 dans la fente d'insertion 24. Cela permet de décrocher aisément la barre de support et donc une partie du système de guidage de retour de bande de convoyage 8 en cas de nécessité de remplacement (cela fonctionnerait également avec un rouleau fixé de cette manière aux profilés 12).

Chaque galet 20 peut être fixé à la barre de support 18 par l'intermédiaire d'un support de galet 22 dont une extrémité est fixée à la barre de support 18 et une autre extrémité est fixée au galet 20. Il est donc possible de remplacer facilement un seul galet d'un bloc de galets.

Selon un exemple non couvert par l'invention, la barre de support 18 peut également traverser les profilés 12 non pas au niveau d'une fente d'insertion mais par des orifices traversants ménagés dans les extrémités libres 14 des profilés 12, un moyen de fixation amovible 26 traversant la barre de support 18 au niveau de ses portions 28 ayant traversé les orifices traversants. Dans ce cas, la barre de support peut être glissée au travers d'orifices traversants ménagés sur deux profilés 12, chaque rive de guidage 4 accueillant un des profilés 12. Le système de fixation via un moyen de fixation amovible peut être identique à celui décrit plus haut et mettant en oeuvre une goupille.

Dans ce cas, la forme des orifices traversants peut être complémentaire de celle de la section de la barre de support mais libre.

De préférence, la barre de support 18 est tubulaire et les orifices traversants sont circulaires. Cela peut présenter un avantage en termes de maintenance du système de guidage de retour de bande de convoyage 8.

En effet, il est possible, au lieu de retirer un bloc de galets pour changer un ou plusieurs des galets 20 usés, de retirer les moyens de fixation amovibles 26 (un à chaque extrémité de la barre de support 18) pour faire pivoter la barre de support 18 autour de son axe longitudinal. Cela permet d'éloigner les galets 20 de la bande de convoyage 5 et ainsi permettre une intervention de maintenance.

Il est possible de munir chaque support de galet 22 d'un patin 30 au niveau d'un côté du support de galet 22 non fixé au galet 20, le patin 30 étant agencé de manière à pouvoir être mis en contact avec la bande de convoyage 5 en cas de rotation de la barre de support 18 autour de son axe longitudinal. Ainsi, et lorsque la barre de support 18 est déplacée en rotation pour éloigner les galets 20 de la bande de convoyage 5, les patins 30 viennent en contact avec cette dernière pour assurer un contact avec le bloc de galets 20 alors que les galets 20 sont en cours de remplacement.

Avantageusement, le système de guidage de retour de bande de convoyage 8 est fixé aux profilés 12 par l'intermédiaire d'une pièce de réglage 19 de l'orientation du système de guidage de retour de bande de convoyage 8.

Dans l'exemple illustré, la pièce de réglage 19 comprend une plaque fixée par boulonnage à l'extrémité libre 14 du profilé 12. Cette dernière peut prendre différentes positions contre le profilé 12 (par exemple plus ou moins proche des côtés du profilé 12), par exemple car les trous ménagés dans le profilé 12, voire également au niveau de la plaque, sont oblongues ou au moins plus large que le corps de la vis le/les traversant.

Cela permet, en fixant les pièces de réglage 19 à des positions différentes au niveau de deux profilés se faisant face, de permettre qu'un ou plusieurs éléments formant le système de guidage de retour de bande de convoyage 8 (un bloc de galets ou un rouleau par exemple) ne s'étendent pas dans une direction perpendiculaire à la direction d'avancée de la bande de convoyage 5. En effet, il est possible d'observer un désaxage de la bande de convoyage 5 qui aurait dès lors tendance à venir toucher/frotter un bord du dispositif de convoyage 2. Il est dès lors possible de réorienter une partie du système de guidage de retour de bande de convoyage 8 dans une direction opposée à ce désaxage afin de réaxer la bande de convoyage 5 sans avoir à envisager une maintenance importante du dispositif de convoyage 2.

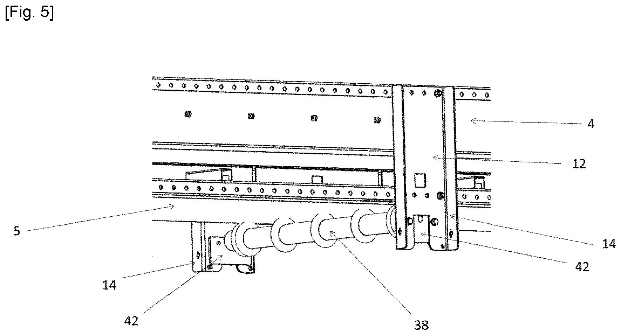

Selon un exemple ne faisant pas partie de l'invention, alternativement à l'utilisation de blocs de galets, et comme cela est visible sur la figure 5, il est possible que le système de guidage de retour de bande de convoyage 8 soit un rouleau 38, lisse ou anti colmatant, comprenant des roulements intégrés au rouleau 38, un axe de rotation du rouleau 38 étant glissé dans un support fendu 42 fixé à deux profilés 12, chacun des deux profilés 12 étant fixés sur une rive de guidage 4 différente l'une de l'autre. Il reste néanmoins possible de mettre en oeuvre des éléments tels que ceux divulgués ci-dessus comme par exemple des pièces de réglage 19 (faisant par exemple office de support fendu 42) ou encore des moyens de fixation amovibles 26.

Avantageusement, une bavette souple 34 (visible sur la figure 4) est fixée à chaque rive de guidage 4 et s'étend au-dessus de la bande de convoyage 5, la fixation de la bavette souple 34 à la rive de guidage 4 étant accessible depuis l'extérieur du dispositif de convoyage 2.

La bavette souple 34 peut être amenée à s'user au cours du temps. Le placement des moyens de fixation de cette dernière vers l'extérieur du dispositif de convoyage 2 permet de remplacer facilement la bavette souple 34.

En plus de la facilité de remplacement de la bavette souple 34, il est possible de placer une plaque de protection 36 (visible sur la figure 4) au-dessus de la bavette souple 34, s'étendant en partie au-dessus de cette dernière et limitant son usure.

L'invention n'est pas limitée aux modes de réalisation présentés et d'autres modes de réalisation apparaîtront clairement à l'homme du métier. Il est notamment possible d'envisager des formes différentes pour les différents éléments formant le système de guidage de retour de bande de convoyage, celle des supports de galets, des pièces de réglage, etc.

### Liste de références numériques

2 : dispositif de convoyage
4 : rives de guidage
5 : bande de convoyage
6 : support de bande de convoyage
8 : système de de guidage de retour de bande de convoyage
10 : traverses
12 ; profilés
14 : extrémités libres
16 : côtés des rives de guidage
18 : barre de support
19 : pièce de guidage
20 : galets
22 : supports de galets
24 : fentes d'insertion
26 : moyens de fixation amovibles
28 : portions de la barre de support
30 : patins
32 : soles de glissement
34 : bavette souple
36 : plaque de protection
38 : rouleau
42 : support fendu

## Revendications

1. Dispositif de convoyage et de tri de matériaux (2) comprenant au moins deux rives de guidage (4) des matériaux, au moins une bande de convoyage (5), un support de la bande de convoyage (6) et un système de guidage de retour de bande de convoyage (8), au moins une rive de guidage (4) constituant un élément structurel du dispositif de convoyage (2), le système de guidage de retour de bande de convoyage (8) comprenant plusieurs blocs de galets formés par une barre de support (18) fixée à deux profilés (12), chacun des deux profilés (12) étant fixés sur une rive de guidage (4) différente l'un de l'autre, et sur laquelle sont fixés des galets (20), **caractérisé en ce que** la barre de support (18) est placée dans des fentes d'insertion (24) réalisées dans les extrémités libres (14) des profilés (12), le dispositif de convoyage (2) comprenant un moyen de fixation amovible (26) traversant l'extrémité libre (14) des profilés (12) et la barre de support (18).

2. Dispositif de convoyage (2) selon la revendication 1, comprenant plusieurs traverses (10) s'étendant entre les rives de guidage (4), fixées à ces dernières et supportant le support de bande de convoyage (6).

3. Dispositif de convoyage (2) selon l'une quelconque des revendications précédentes, comprenant plusieurs profilés (12) fixés à chaque rive de guidage (4), le système de guidage de retour de bande de convoyage (8) étant fixé à des extrémités libres (14) des profilés s'étendant à partir d'un côté (16) des rives de guidage (4).

4. Dispositif de convoyage (2) selon la revendication précédente, dans lequel chaque profilé (12) fixé sur une rive de guidage (4) s'étend en regard d'un profilé fixé (12) sur l'autre rive de guidage (4).

5. Dispositif de convoyage (2) selon l'une quelconque des revendications précédentes, dans lequel chaque galet (20) est fixé à la barre de support (18) par l'intermédiaire d'un support de galets (22) dont une extrémité est fixée à la barre de support (18) et une autre extrémité est fixée au galet (20).

6. Dispositif de convoyage (2) selon l'une quelconque des revendications précédentes, dans lequel le support de bande de convoyage (6) comprend une sole de glissement composée de plusieurs soles de glissement (32), chaque sole de glissement (32) étant emboîtée sur plusieurs traverses (10).

7. Dispositif de convoyage (2) selon l'une quelconque des revendications précédentes, dans lequel le système de guidage de retour de bande de convoyage (8) est fixé aux profilés (12) par l'intermédiaire d'une pièce de réglage (19) de l'orientation du système de guidage de retour de bande de convoyage (8).

8. Dispositif de convoyage (2) selon l'une quelconque des revendications précédentes, dans lequel une bavette souple (34) est fixée à chaque rive de guidage (4) et s'étend au-dessus de la bande de convoyage (5), la fixation de la bavette souple (34) à la rive de guidage (4) étant accessible depuis l'extérieur du dispositif de convoyage (2).

9. Dispositif de convoyage (2) selon la revendication précédente, dans lequel une plaque de protection (36) s'étend en partie au-dessus de la bavette souple (34).

## Patentansprüche

1. Förder- und Sortiervorrichtung für Material (2), umfassend mindestens zwei Führungskanten (4) zum Führen des Materials, mindestens ein Förderband (5), einen Förderbandträger (6) und ein Förderbandrückführungssystem (8), wobei mindestens eine Führungskante (4) ein strukturelles Element der Fördervorrichtung (2) bildet, wobei das Förderbandrückführungssystem (8) mehrere Rollenblöcke umfasst, die durch eine an zwei Profilen (12) befestigte Trägerstange (18) gebildet werden, wobei jedes der beiden Profile (12) an einer Führungskante (4) befestigt ist, die voneinander verschieden sind, und wobei an der Trägerstange Rollen (20) befestigt sind, **dadurch gekennzeichnet, dass** die Trägerstange (18) in Einführungsschlitzen (24) platziert ist, die in den freien Enden (14) der Profile (12) ausgeführt sind, wobei die Fördervorrichtung (2) ein lösbares Befestigungsmittel (26) umfasst, welches das freie Ende (14) der Profile (12) und die Trägerstange (18) durchdringt.

2. Fördervorrichtung (2) nach Anspruch 1, umfassend mehrere Traversen (10), die sich zwischen den Führungskanten (4) erstrecken, an Letzteren befestigt sind und den Förderbandträger (6) tragen.

3. Fördervorrichtung (2) nach einem der vorhergehenden Ansprüche, umfassend mehrere Profile (12), die an jeder Führungskante (4) befestigt sind, wobei das Förderbandrückführungssystem (8) an freien Enden (14) der Profile befestigt ist, die sich von einer Seite (16) der Führungskanten (4) aus erstrecken.

4. Fördervorrichtung (2) nach dem vorhergehenden Anspruch, wobei sich jedes an einer Führungskante (4) befestigte Profil (12) gegenüber einem an der anderen Führungskante (4) befestigten Profil (12) erstreckt.

5. Fördervorrichtung (2) nach einem der vorhergehenden Ansprüche, wobei jede Rolle (20) an der Trägerstange (18) über einen Rollenträger (22) befestigt ist, von dem ein Ende an der Trägerstange (18) befestigt ist und ein anderes Ende an der Rolle (20) befestigt ist.

6. Fördervorrichtung (2) nach einem der vorhergehenden Ansprüche, wobei der Förderbandträger (6) eine Gleitsohle umfasst, die aus mehreren Gleitsohlen (32) besteht, wobei jede Gleitsohle (32) auf mehrere Traversen (10) gesteckt ist.

7. Fördervorrichtung (2) nach einem der vorhergehenden Ansprüche, wobei das Förderbandrückführungssystem (8) an den Profilen (12) über ein Einstellteil (19) zum Einstellen der Ausrichtung des Förderbandrückführungssystems (8) befestigt ist.

8. Fördervorrichtung (2) nach einem der vorhergehenden Ansprüche, wobei eine flexible Leiste (34) an jeder Führungskante (4) befestigt ist und sich oberhalb des Förderbands (5) erstreckt, wobei die Befestigung der flexiblen Leiste (34) an der Führungskante (4) von außerhalb der Fördervorrichtung (2) zugänglich ist.

9. Fördervorrichtung (2) nach dem vorhergehenden Anspruch, wobei sich eine Schutzplatte (36) teilweise oberhalb der flexiblen Leiste (34) erstreckt.

## Claims

1. Device for conveying and sorting materials (2), comprising at least two edge members (4) for guiding the materials, at least one conveyor belt (5), a support for the conveyor belt (6) and a conveyor belt return guiding system (8), at least one guiding edge member (4) constituting a structural element of the conveying device (2), the conveyor belt return guiding system (8) comprising a plurality of wheel blocks formed by a support bar (18) that is fastened to two profiles (12), each of the two profiles (12) being fastened to a different guiding edge member (4) from the other, and to which wheels (20) are fastened, **characterized in that** the support bar (18) is placed in insertion slots (24) made in the free ends (14) of the profiles (12), the conveying device (2) comprising a removable fastening means (26) passing through the free end (14) of the profiles (12) and the support bar (18).

2. Conveying device (2) according to Claim 1, comprising a plurality of crossmembers (10) extending between the guiding edge members (4), fastened to the latter and supporting the conveyor belt support (6).

3. Conveying device (2) according to either one of the preceding claims, comprising a plurality of profiles (12) fastened to each guiding edge member (4), the conveyor belt return guiding system (8) being fastened to free ends (14) of the profiles extending from one side (16) of the guiding edge members (4).

4. Conveying device (2) according to the preceding claim, wherein each profile (12) fastened to one guiding edge member (4) extends facing a profile (12) fastened to the other guiding edge member (4).

5. Conveying device (2) according to any one of the preceding claims, wherein each wheel (20) is fastened to the support bar (18) via a wheel support (22) of which one end is fastened to the support bar (18) and another end is fastened to the wheel (20).

6. Conveying device (2) according to any one of the preceding claims, wherein the conveyor belt support (6) comprises a slider bed made up of a plurality of slider beds (32), each slider bed (32) being fitted on a plurality of crossmembers (10).

7. Conveying device (2) according to any one of the preceding claims, wherein the conveyor belt return guiding system (8) is fastened to the profiles (12) via a piece (19) for adjusting the orientation of the conveyor belt return guiding system (8).

8. Conveying device (2) according to any one of the preceding claims, wherein a flexible flap (34) is fastened to each guiding edge member (4) and extends above the conveyor belt (5), the fastening of the flexible flap (34) to the guiding edge member (4) being accessible from the outside of the conveying device (2).

9. Conveying device (2) according to the preceding claim, wherein a protective plate (36) extends partly above the flexible flap (34).
